# EUROPEAN PATENT APPLICATION

(11) **EP 1 779 953 A1**
(43) Date of publication of application: **02.05.2007**
(21) Application number: 06405449.7
(22) Date of filing: 24.10.2006
(51) Int. Cl.: B23H 1/06, B23H 1/10, B23H 7/24, B23H 9/14

(54) **Electroerosion method using liquid electrode.**

(30) Priority: 25.10.2005 CH 17072005
(71) Applicant: Sarix S.A., 6616 Losone (CH)
(72) Inventor: Salim, Ehsan, 6616 Losone (CH)
(74) Representative: Fiammenghi-Domenighetti, Delfina

(57) **Abstract**

What is described is a method for machining a metallic piece (1) by electroerosion, achieved by generating discharges of electrical current through a conductive liquid medium (3) between the piece (1) itself and an electrode (2) positioned at a predetermined operating distance therefrom. The method according to the invention uses a liquid electrode (2) consisting of the said current-conducting liquid medium (3) contained in a capillary tube (4), this conductive liquid medium (3) being supplied continuously and with a flow rate equal to the quantity of liquid which is consumed to the free end (4e) of the said capillary tube (4) facing the workpiece (1).

## Description

The present invention relates to the field of electroerosion, in other words the method of machining metal pieces in which the parts to be removed are detached by discharges of electrical current which are generated in such a way that they create a straight electrical discharge between an electrode, shaped in exactly the same way as the part to be removed, and the workpiece. The aforesaid electrical discharge can be generated by immersing both the said piece and the electrode in a fluid medium which conducts electricity.

This procedure makes it necessary to construct metal electrodes shaped in exactly the same way as the areas of the parts of the piece which are to be removed, and this substantially increases the cost and total time of carrying out a machining operation. A problem also arises from the fact that the electrodes also become eroded during the machining, possibly depending on the type of material used, by the aforesaid electrical discharges, as a result of which their shape can change, creating a lack of precision in the machining which is usually unacceptable.

This makes it necessary to conduct lengthy and sometimes complicated tests in order to determine the shape of the electrode according to the materials from which it and the workpiece are made.
The inventor of the subject of the present application has devised an innovative electroerosion method, the use of which avoids the problems mentioned above.

In this method, the electrode used is a liquid column contained in a capillary tube whose free end faces the workpiece. The aforesaid liquid column is formed by the aforesaid conductive liquid medium normally used to carry the current of the electrical discharges, and is constantly reconstituted in a continuous way by introducing into it a quantity of fluid medium exactly equal to that consumed by the electroerosion process. It is then simply necessary to move the piece facing it or the liquid column in such a way that the electrical discharge passing through the liquid medium, which has the same cross-sectional shape as the capillary, "draws" the region to be removed on the piece itself, acting for a predetermined period to achieve the desired depths and shapes.

The said capillary tube can be made of conductive or non-conductive material, as required: in the latter case, clearly, the cross section of the capillary also acts as if it formed part of the electrode, thus increasing the cross-sectional area of the electric arc generated. It has been demonstrated experimentally that the variation in shape of the end of the capillary tube is compatible with the requisite precision.

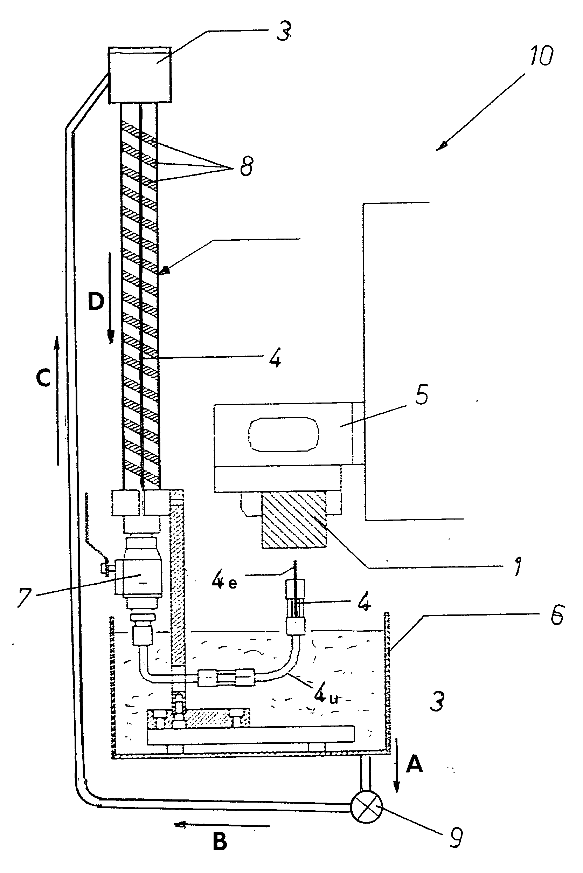

The object of the present invention is therefore a method for machining a metal piece by electroerosion as described in the attached claim 1 and an electroerosion machine for applying this method.
The method according to the invention will now be described in greater detail, with reference to the attached figure, which shows schematically a side view in partial section of a preferred example of embodiment of a machine to be used for the application of the method.

The figure shows how, in an electroerosion machine 10 for applying the method according to the invention, the metal piece 1 to be machined is supported by a workpiece holder 5, connected to a current generator 5', which keeps the piece 1 facing the free end 4e of a U-shaped portion 4u forming the lower termination of a capillary tube (having a cross section which may be less than 1 mm) containing within it an electrically conductive liquid medium 3.
The remaining part of the capillary tube 4, as shown in the figure, is a vertical column, which can advantageously terminate at its top in a transparent capsule 11 in which the level of the said liquid medium 3 can be viewed.

When an electrical discharge is initiated between the piece 1 and the conductive liquid medium 3 (or the capillary tube as a whole if its walls are conductive), the electroerosion of the parts of the piece 1 to be machined is produced and an area exactly equal to that of the region to be eroded can be traced on the piece when the latter is moved appropriately by means of the aforesaid workpiece holder device 5.
The flow rate of conductive liquid medium 3 through the capillary tube can be controlled, according to the type of machining, by operating a flow control valve 7.
Clearly, the conductive liquid medium 3 contained in the capillary tube 4 is progressively consumed in the course of the electroerosion process and its quantity has to be restored by introducing more medium into the capillary.

This operation can advantageously be performed by drawing the conductive liquid medium 3, after filtration, from the containing vessel 6, of a known type for this type of technology, positioned in the lower area of the machine 10 and containing the liquid medium 3, and by then sending the medium, by means of a pump 9 or similar pumping means, towards the higher part of the capillary tube 4, to the position of the previously described transparent capsule 11. (The arrows A, B, C and D in the figure indicate the direction of flow of the conductive liquid medium 3.)

As regards the material from which the walls of the capillary tube 4 are made, this can be of an electrically insulating type (resin, ceramic, or the like) if the cross-sectional area of the capillary tube is sufficient to allow the flow of a current having a sufficient strength to allow the electroerosion process to take place.
As mentioned above, the walls are preferably made from a conductive metallic material if this is necessary to reduce the total resistance to the flow of current through the capillary tube 4 as a whole. This is the case when the cross-sectional area of the capillary tube 4 containing the conductive liquid medium 3 is very small.

The capillary tube 4, or at least part of it, can advantageously be heated by systems of a known type (for example a resistance 8 wound around it, as shown in the figure), so as to keep the liquid medium 3 contained in it at the temperature considered most compatible with the purposes of the correct application of the method of the invention.

Finally, it should be noted that, if the capillary tube used is made from insulating material and its cross-sectional area is too small to allow the flow of sufficient current through the liquid medium 3 to initiate an electrical discharge, the simple electrochemical erosion of a piece can be achieved by placing it in direct contact with the free end 4e of the capillary tube 4.
The U-shaped terminal part 4u of the capillary tube 4 facing the piece 1 positioned vertically above it, as in the figure, allows the rapid removal by gravity of the fragments removed by electroerosion from the piece 1 being worked on.
A further note for information concerns the composition of the conductive liquid medium 3 described above. This can consist of a saturated aqueous solution of one of the following electrically conductive substances: copper sulphate, sodium chloride, potassium chloride, potassium bromide, ammonium iodide, potassium iodide, and/or substances having similar characteristics.

## Claims

1. Method for machining a metallic piece (1) by electroerosion, achieved by generating discharges of electrical current through a conductive liquid medium (3) between the piece (1) itself and an electrode (2) positioned at a predetermined operating distance therefrom, **characterized in that** use is made of a liquid electrode (2) consisting of the said conductive liquid medium (3) contained in a capillary tube (4), this conductive liquid medium (3) being introduced into the capillary tube (4) continuously and with a flow rate equal to the quantity of liquid which is consumed the free end (4e) of the capillary tube (4) facing the workpiece (1).

2. Method according to Claim 1, in which the said capillary tube (4) is made from non-conductive material.

3. Method according to Claim 1, in which the said capillary tube (4) is made from conductive material.

4. Method according to one of the preceding claims, in which the said liquid medium (3) is a saturated solution of an electrically conductive substance.

5. Method according to Claim 4, in which the said current-conducting liquid medium (3) is a saturated aqueous solution of one of the substances in the following group: copper sulphate, sodium chloride, potassium chloride, potassium bromide, ammonium iodide, and potassium iodide.

6. Machine (10) for electroerosion, **characterized in that** it comprises:
a) a capillary tube (4) positioned vertically, and terminating in its lower part in a U-shaped portion (4u) with its free end (4e) facing upwards;
b) a conductive liquid medium (3) contained in the said capillary tube (4);
c) a workpiece holder device (5) made in such a way as to support the workpiece (1) while keeping it at a predetermined distance from the said free end (4e) of the capillary tube (4) in a position vertically higher than the latter, and making it travel along predetermined movement paths;
d) means (2) for ensuring that the said free end (4e) of the capillary tube (4) is continuously supplied with a flow of the said conductive liquid medium (3) equal to the amount consumed by the electroerosion.
e) means for causing the workpiece holder device (5) to make predetermined movements in the course of machining;
f) a containing vessel (6) positioned below the elevated parts, and containing the conductive liquid medium (3).

7. Machine according to Claim 5, in which the said means for controlling the rate of flow of conductive solution (3) out of the free end (4e) of the capillary tube (4) comprise a flow control valve (7).

8. Machine according to one of Claims 5 or 6, in which the said means for controlling the rate of flow of conductive solution (3) reaching the free end (4e) of the capillary tube (4) comprise a pumping apparatus (9).

9. Machine according to one of the preceding claims, in which at least part of the said capillary tube (4) is provided with heating means (8).
